# EUROPEAN PATENT SPECIFICATION

(11) **EP 4 495 145 B1**
(45) Date of publication and mention of the grant of the patent: **08.04.2026**
(21) Application number: 23770069.5
(22) Date of filing: 11.01.2023
(51) Int. Cl.: C08L 15/00, C08L 9/00, C08C 19/20, C08C 19/26, C08G 61/08

(54) **COMPLEX POLYMER AND METHOD OF MANUFACTURING THE SAME, AND RUBBER COMPOSITION AND METHOD OF MANUFACTURING THE SAME**
KOMPLEXIERTES POLYMER UND VERFAHREN ZU SEINER HERSTELLUNG SOWIE KATSCHUKZUSAMMENSETZUNG UND VERFAHREN ZU IHRER HERSTELLUNG
POLYMÈRE COMPLEXÉ ET SON PROCÉDÉ DE PRODUCTION, ET COMPOSITION DE CAOUTCHOUC ET SON PROCÉDÉ DE PRODUCTION

(30) Priority: 18.03.2022 JP 2022044688
(43) Date of publication of application: 22.01.2025
(73) Proprietor: BRIDGESTONE CORPORATION, Chuo-ku Tokyo 104-8340 (JP)
(72) Inventor: KAWADA Midori, Tokyo 104-8340 (JP); TARDIF Olivier, Tokyo 104-8340 (JP); HAMATANI Satoshi, Tokyo 104-8340 (JP)
(74) Representative: Marks & Clerk LLP
(86) International application number: PCT/JP2023/000490
(87) International publication number: WO 2023/176105

(56) References cited:
- WO-A1-2013/108614
- WO-A1-2022/049961
- CN-A- 101 402 709
- CN-A- 109 280 143
- JP-A- 2012 505 943
- JP-A- 2020 100 718
- JP-B1- S4 744 351

## Description

### TECHNICAL FIELD

The present disclosure relates to a complex polymer and a method of manufacturing the same, and to a rubber composition and a method of manufacturing the same.

### BACKGROUND

Conventionally, vulcanized rubber products, such as used tires, have been discarded without being reused. However, in recent years, recycling used vulcanized rubber products has become an urgent matter in view of environmental issues, resource conservation, and the like.

A known method for regenerating used vulcanized rubber products involves applying heat and shear force to used vulcanized rubber products using a twin screw extruder. However, crosslinked polymers such as vulcanized rubber products inevitably deteriorate because they are recycled through harsh conditions. For example, rubber products made from recycled rubber have inferior physical properties, such as tensile strength at break (TB) and elongation at break (EB), compared to rubber products not made from recycled rubber.

Meanwhile, PTL 1 discloses an elastomer containing vicinal diol units having a certain structure and but-1-ene-1,4-diyl units having a certain structure. This elastomer is described as being excellent in toughness and having recyclability. PTL 2 relates to a complex polymer which comprises a polymer main chain containing a conjugated diene unit and/or an olefin unit; and a functional group containing a nitrogen and/or phosphorus atom therein bonded to the polymer main chain, and wherein the functional group is complexed with a metal.

PTL 3 relates to functionalised diene rubbers and their production; wherein said functionalised diene rubbers are obtained by polymerisation of dienes and subsequent reaction with hydroxymercaptans.

### CITATION LIST

### Patent Literature

PTL 1: JP 2020-100718 A, PTL 2 WO-2022049961 A1, PTL 3 US-2011282001 A1

### SUMMARY

### (Technical Problem)

However, the present inventors have found through investigation that the elastomer disclosed in PTL 1 is crosslinked by hydrogen bonds of the diol, and the hydrogen bonds dissociate easily at high temperatures and that the elastomer cannot maintain physical properties such as tensile strength at break (TB) and elongation at break (EB).

Therefore, an object of the present disclosure is to solve the problem of the above-mentioned conventional art and to provide a polymer (such as a rubber) having improved tensile strength at break (TB) and elongation at break (EB) and a method of manufacturing the same.

Another object of the present disclosure is to provide a rubber composition containing such a polymer and having improved tensile strength at break (TB) and elongation at break (EB), and a method of manufacturing the same.

### (Solution to Problem)

The gist of a complex polymer and a method of manufacturing the same, and a rubber composition and a method of manufacturing the same, which solve the above problem, is as follows.
[1] A complex polymer comprising:
   a polymer chain containing a diene unit and/or an olefin unit; and
   two or more functional groups containing an oxygen atom bonded to a main chain and/or a side chain of the polymer chain,
   wherein the oxygen atoms in at least two of the functional groups are bonded to adjacent carbon atoms in the main chain and/or the side chain of the polymer chain, and at least two of the functional groups are complexed with a metal ion of an element of Groups 3 to 12 in the periodic table.
[2] The complex polymer according to [1], wherein a bond dissociation energy between the metal ion and the functional groups is 100 kJ/mol or more.
[3] The complex polymer according to [1] or [2], wherein the metal ion and the functional groups are bonded by a coordination bond.
[4] The complex polymer according to any one of [1] to [3], wherein the oxygen atoms in at least two of the functional groups are bonded to the metal ion.
[5] The complex polymer according to any one of [1] to [4], wherein at least two of the functional groups containing an oxygen atom are derived from hydroxyl groups.
[6] The complex polymer according to any one of [1] to [5], wherein the metal ion is selected from metal ions of elements of the fourth and fifth periods in the periodic table.
[7] The complex polymer according to any one of [1] to [6], wherein the metal ion is selected from metal ions of elements of Groups 7 to 12 in the periodic table.
[8] The complex polymer according to [6] or [7], wherein the metal ion is at least one selected from the group consisting of iron, copper, and zinc ions.
[9] The complex polymer according to any one of [1] to [8], wherein the functional groups are bonded to the polymer chain in an amount of 0.1 to 40 mol% with respect to the monomer units.
[10] The complex polymer according to any one of [1] to [9], wherein the metal ion is complexed by adding a metal salt to the polymer chain to which the functional groups are bonded.
[11] The complex polymer according to [10], wherein the metal salt is a metal halide.
[12] The complex polymer according to [11], wherein the metal salt is a metal chloride.
[13] The complex polymer according to any one of [10] to [12], wherein the metal salt is other than metal oxides, metal carbonates, and fatty acid metal salts.
[14] A rubber composition comprising the complex polymer according to any one of [1] to [13].
[15] A method of manufacturing the complex polymer according to any one of [1] to [13], the method comprising:
   causing the polymer chain to which the functional groups are bonded to react with a metal salt containing an element of Groups 3 to 12 in the periodic table.
[16] The method of manufacturing the complex polymer according to [15], wherein a molar ratio of the functional groups bonded to the polymer chain to the metal salt (functional groups bonded to the polymer chain/metal salt) is 4 or more.
[17] A method of manufacturing the rubber composition according to [14], the method comprising:
   generating the complex polymer by kneading the polymer chain to which the functional groups are bonded with a metal salt containing an element of Groups 3 to 12 in the periodic table.
**[18]** The method of manufacturing the rubber composition according to [17], wherein the amount of the metal salt is 0.1 to 10 parts by mass per 100 parts by mass of the polymer chain to which the functional groups are bonded.

### (Advantageous Effect)

According to the present disclosure, a polymer having improved tensile strength at break (TB) and elongation at break (EB) and a method of manufacturing the same can be provided.

In addition, according to the present disclosure, a rubber composition containing such a polymer and having improved tensile strength at break (TB) and elongation at break (EB), and a method of manufacturing the same can be provided.

### DETAILED DESCRIPTION

A complex polymer and a method of manufacturing the same, and a rubber composition and a method of manufacturing the same of the present disclosure are described below in detail with reference to embodiments thereof.

### <Complex Polymer>

A complex polymer of the present disclosure contains a polymer chain containing a diene unit and/or an olefin unit, and two or more functional groups containing an oxygen atom bonded to a main chain and/or a side chain of the polymer chain,
wherein the oxygen atoms in at least two of the functional groups are bonded to adjacent carbon atoms in the main chain and/or the side chain of the polymer chain, and at least two of the functional groups are complexed with a metal ion of an element of Groups 3 to 12 in the periodic table.

The complex polymer of the present disclosure contains a polymer chain and two or more functional groups containing an oxygen atom, and at least two of the functional groups are complexed with a metal ion of an element of Groups 3 to 12 in the periodic table.

Here, the oxygen atoms in at least two of the functional groups are bonded to adjacent carbon atoms of the main chain and/or the side chain of the polymer chain, in other words, the at least two functional groups are present in close proximity in the complex polymer of the present disclosure. Accordingly, the complexation of the at least two functional groups with the metal ion of the element of Groups 3 to 12 in the periodic table can crosslink the polymer chain with higher strength than hydrogen bonds, thereby improving the tensile strength at break (TB) and elongation at break (EB).

Therefore, the complex polymer of the present disclosure has high tensile strength at break (TB) and elongation at break (EB).

In addition, since the bond between the metal ion and the functional groups are not formed by sulfur as in generally-used vulcanized rubbers, the bond can be easily disassociated, e.g., by heating to flow and be remolded. Thus, the bond can be easily disassociated, and there is no need to expose the complex polymer to harsh conditions in order to break the bonds. Since the polymer chain with functional groups containing an oxygen atom, of which bonding easily disassociates by breaking the bond between the metal ion and the functional groups, does not need to be exposed to harsh conditions to break the bond, the performance of the polymer chain is maintained. Additionally, even when a complex polymer is regenerated by complexing the polymer chain having the functional groups with a metal ion, the performance of the complex polymer can be maintained at the same level as if it is new. Accordingly, the complex polymer of the present disclosure is also recyclable.

### (Polymer Chain)

The complex polymer of the present disclosure contains a polymer chain containing a diene unit and/or an olefin unit. In other words, the polymer chain contains either diene or olefin units, or both diene and olefin units. Here, the number of polymer chains is one or more. When there is a single polymer chain, the complex polymer forms an intramolecular crosslinked structure via metal ions. Alternatively, when there are two or more polymer chains, crosslinked structures can be formed via metal ions not only intramolecularly but also intermolecularly (between polymer chains). Note that the complex polymer has two or more functional groups to form a crosslinked structure, where the two or more functional groups may be the same or different from each other.

The diene unit may be a diene unit that is conjugated (conjugated diene unit) or a diene unit that is not conjugated (unconjugated diene unit).

The conjugated diene unit is a monomer unit derived from a conjugated diene compound. The conjugated diene compound as a monomer preferably has 4 to 8 carbon atoms. Examples of such a conjugated diene compound include 1,3-butadiene, isoprene, 1,3-pentadiene, and 2,3-dimethyl-1,3-butadiene. The conjugated diene compound as a monomer preferably includes 1,3-butadiene and/or isoprene in view of good elastomeric properties.

The non-conjugated diene unit is a monomer unit derived from a non-conjugated diene compound. Examples of the non-conjugated diene compound as a monomer include cycloocta-1,5-diene compounds represented by the following general formula (1): 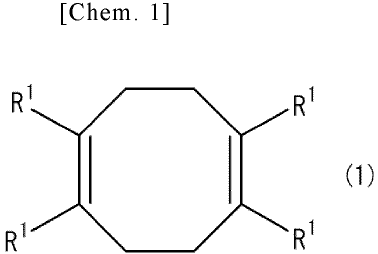 where R¹s are independently a hydrogen atom, a halogen atom, or an alkyl group having 1 to 5 carbon atoms.

As cycloocta-1,5-diene compounds of the general formula (1), commercially available compounds may be used, or compounds synthesized according to known methods may be used. In view of ease of availability, compounds in which R¹s are a hydrogen atom, a halogen atom, methyl group, or ethyl group are preferred, compounds in which R¹s are a hydrogen atom or methyl group are more preferred, and a compound in which R¹s are a hydrogen atom is particularly preferred. Specifically, examples of cycloocta-1,5-diene compounds of formula (1) include cycloocta-1,5-diene, 1-chlorocycloocta-1,5-diene, 1,5-dichlorocycloocta-1,5-diene, 1-methylcycloocta-1,5-diene, and 1,5-dimethylcycloocta-1,5-diene.

The ratio of diene unit in the polymer chain is not particularly limited and may be 0 mol%, but it is preferred to be 0.1 mol% or more, and even more preferred to be 1 mol% or more, or may be 100 mol%. When the above ratio is 1 mol% or more, a complex polymer with excellent elastomeric properties can be obtained.

The olefin unit refers to a monomer unit derived from an olefin compound. The olefin compound as a monomer preferably has 2 to 10 carbon atoms. Specific examples of such an olefin compound include α-olefins such as ethylene, propylene, 1-pentene, 1-hexene, 1-heptene, and 1-octene, as well as heteroatom-substituted alkene compounds such as vinyl pivalate, 1-phenylthioethene, and N-vinylpyrrolidone.

**In** addition, the olefin compound may have two or more functional groups containing an oxygen atom. Examples of olefin compounds having two or more functional groups containing an oxygen atom are 5-cyclooctene-1,2-diol compounds represented by the following general formula (2): 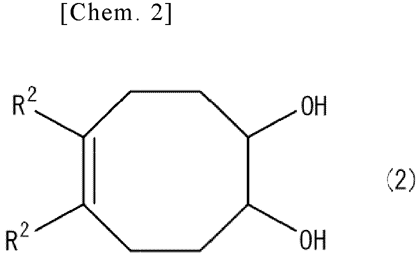 where R²s are independently a hydrogen atom, a halogen atom, or an alkyl group having 1 to 5 carbon atoms.

As 5-cyclooctene-1,2-diol compounds of the general formula (2), commercially available compounds may be used, or compounds synthesized according to known methods may be used. In view of ease of availability, compounds in which R²s are a hydrogen atom, a halogen atom, methyl group, or ethyl group are preferred, compounds in which R²s are a hydrogen atom or methyl group are more preferred, and a compound in which R²s are a hydrogen atom is particularly preferred. Specifically, examples of 5-cyclooctene-1,2-diol compounds of the general formula (2) include 5-cyclooctene-1,2-diol and the like.

The ratio of the olefin unit in the polymer chain is not particularly limited and may be 0 mol%, but 1 mol% or more is preferred, and may even be 100 mol%.

The polymer chain may be synthesized by polymerization or copolymerization of the diene compound and/or the olefin compound described above.

Furthermore, the polymer chain may also contain units derived from other monomers that can copolymerize with the diene compound and/or the olefin compound. Examples of such units derived from other monomers include an aromatic vinyl unit and the like. The ratio of units derived from other monomers in the polymer chain is not particularly limited and may be 0 mol%. However, in one embodiment, 1 mol% or more is preferred and 50 mol% or less is preferred.

The aromatic vinyl unit is a monomer unit derived from an aromatic vinyl compound. The aromatic vinyl compound refers to an aromatic compound substituted at least by a vinyl group. The aromatic vinyl compound as a monomer preferably has 8 to 10 carbon atoms. Specifically, examples of such an aromatic vinyl compound include styrene, α-methylstyrene, 2-methylstyrene, 3-methylstyrene, 4-methylstyrene, 2,4-dimethylstyrene, 2-ethylstyrene, 3-ethylstyrene, and 4-ethylstyrene.

### (Functional Group)

The complex polymer of the present disclosure contains two or more functional groups containing an oxygen atom bonded to the main chain and/or the side chain of the polymer chain. The oxygen atoms in at least two of the functional groups are bonded to adjacent carbon atoms in the main chain and/or the side chain of the polymer chain, and at least two of the functional groups are complexed with a metal ion of an element of Groups 3 to 12 in the periodic table. Since the functional groups contain an oxygen atom and complex with a metal ion of an element of Groups 3 to 12 in the periodic table, the bond between the functional groups and the metal ion is strengthened. In addition, since the oxygen atom in one functional group and the oxygen atom in the other functional group are bonded to adjacent carbon atoms in the main chain and/or the side chain of the polymer chain, the complexation of the two functional groups with one metal ion is promoted, forming strong crosslinking and improving the tensile strength at break (TB) and elongation at break (EB) of the complex polymer.

Note that the polymer chain includes a site where multiple carbon atoms are directly bonded, and the oxygen atoms in at least two of the functional groups are bonded to carbon atoms (carbon atoms at the site where multiple carbon atoms of the polymer chain are directly bonded). Additionally, it can be said that the number of carbon atoms between the oxygen atom in the one functional group and the oxygen atom in the other functional group is two, or that vicinal functional groups containing an oxygen atom are included.

In the complex polymer of the present disclosure, the bond dissociation energy between the metal ion and the functional groups is preferably 100 kJ/mol or more, more preferably 200 kJ/mol or more, and even more preferably 250 kJ/mol or more, and is preferably 500 kJ/mol or less. When the bond dissociation energy is 100 kJ/mol or more, crosslinking with even higher strength can be formed and the tensile strength at break (TB) and elongation at break (EB) of the complex polymer are further improved. In addition, when the bond dissociation energy is 500 kJ/mol or less, the bond between the metal ion and the functional groups can be more easily disassociated and the complex polymer can be recycled more easily.

Here, in the present disclosure, the bond dissociation energy between the metal ion and the functional groups is a value calculated in the M06/6-31G(d,p)//B3PW91-D3/6-31G(d,p) level or the M06/6-31G(d,p) level in vacuum. It is considered that the metal salt and the functional groups form ionic aggregates. Gaussian 09 or GRRM 14 can be used to calculate the bond dissociation energy.

In the complex polymer of the present disclosure, it is preferred that the metal ion and the functional groups are bonded by a coordination bond. A coordination bond can provide sufficient reversibility in the bonding between the metal ion and the functional groups. Furthermore, when a coordination bond is formed, it is easier for the metal ion and the functional groups to form a bond with sufficient strength, and it is also easier to make the complex polymer flow by heating, which makes remolding easier and further improves the recyclability of the complex polymer.

Examples of the functional groups containing an oxygen atom include hydroxyl groups, carboxyl groups, or functional groups derived from these groups. For example, when complexing with the metal ion, hydroxyl groups or carboxyl groups may lose protons and thus may not remain as hydroxyl or carboxyl groups. Therefore, functional groups derived from hydroxyl groups include both hydroxyl groups and groups in which the proton has been removed from the hydroxyl groups. Similarly, functional groups derived from carboxyl groups include both carboxyl groups and groups in which the proton has been removed from the carboxyl group.

In the complex polymer of the present disclosure, it is preferred that the oxygen atoms in at least two of the functional groups are bonded to the metal ion. The bonding of oxygen atoms in the functional groups to the metal ion allows for the formation of crosslinking with even higher strength, further improving the tensile strength at break (TB) and elongation at break (EB) of the complex polymer.

In the complex polymer of the present disclosure, at least two of the functional groups containing an oxygen atom are preferably derived from hydroxyl groups. Functional groups derived from hydroxyl groups can easily complex with the metal ion to form crosslinking with even higher strength, further improving the tensile strength at break (TB) and elongation at break (EB) of the complex polymer.

In the complex polymer of the present disclosure, it is preferred that the functional groups are derived from a compound having a functional group containing an oxygen atom. Examples of compounds having a functional group containing an oxygen atom include 5-cyclooctene-1,2-diol compounds represented by the above general formula (2) and thioglycerol.

In the complex polymer of the present disclosure, the functional groups are bonded in an amount of preferably 0.1 to 40 mol%, and more preferably 0.1 to 30 mol% with respect to the monomer units in the polymer chain. When the functional groups are bonded in an amount of 0.1 mol% or more with respect to the monomer units in the polymer chain, crosslinking with high strength can be formed and the tensile strength at break (TB) and elongation at break (EB) of the complex polymer are further improved. Furthermore, when the functional groups are bonded with respect to the monomer units in the polymer chain in an amount of 40 mol% or less, a complex polymer with sufficient elastomeric properties becomes more likely to be obtained.

### (Metal Ion)

In the complex polymer of the present disclosure, the metal ion that complexes with the functional groups is a metal ion of an element of Groups 3 to 12 in the periodic table.

Specifically, examples of elements in Group 3 in the periodic table include scandium and yttrium.

Furthermore, examples of elements in Group 4 in the periodic table include titanium and zirconium.

Furthermore, examples of elements in Group 5 in the periodic table include vanadium and niobium.

Furthermore, examples of elements in Group 6 in the periodic table include chromium, molybdenum, and tungsten.

Specifically, examples of elements in Group 7 in the periodic table include manganese and rhenium.

Furthermore, examples of elements in Group 8 in the periodic table include iron, ruthenium, and osmium.

Furthermore, examples of elements in Group 9 in the periodic table include cobalt, rhodium, and iridium.

Furthermore, examples of elements in Group 10 in the periodic table include nickel, palladium, and platinum.

Furthermore, examples of elements in Group 11 in the periodic table include copper and silver.

Furthermore, examples of elements in Group 12 in the periodic table include zinc.

Metal ions of elements of Groups 3 to 12 in the periodic table tend to bond strongly with the functional groups containing an oxygen atom.

Note that the valence of the ion of metal ion of an element of Groups 3 to 12 in the periodic table is not particularly limited and may be any valence that each element can take.

The metal ion is preferably selected from metal ions of elements of Groups 7 to 12 in the periodic table. When the metal ion is a metal ion of an element in Groups 7 to 12 in the periodic table, the bond with the functional groups containing an oxygen atom tend to be even more stronger and crosslinking with higher strength can be formed.

The metal ion is preferably selected from metal ions of elements in the fourth and fifth periods in the periodic table. Metal ions of elements in the fourth and fifth periods in the periodic table have high coordination strength to the functional groups containing an oxygen atom, which improves the bond dissociation energy between the metal ion and the functional groups and further improves the tensile strength at break (TB) and elongation at break (EB) of the complex polymer.

It is particularly preferred that the metal ion is at least one selected from the group consisting of iron, copper, and zinc ions. Iron, zinc, and copper ions tend to bond particularly strongly with functional groups containing an oxygen atom and can form stronger crosslinked structures. Note that the valence of the iron ion is preferably divalent (Fe²⁺) or trivalent (Fe³⁺).

**In** the complex polymer of the present disclosure, the metal ion is preferably complexed by adding a metal salt to the polymer chain to which the functional groups are bonded. In this case, a complex polymer can be easily obtained, and crosslinking with high strength can be formed. Note that the form of the metal salt to be added is not particularly limited and may be, for example, a hydrate. Furthermore, the amount of the metal salt to be added is preferably in a range of 0.1 to 10 parts by mass and more preferably in a range of 0.1 to 5 parts by mass per 100 parts by mass of the polymer chain.

Examples of the metal salt mentioned above include metal halides, metal sulfates, and metal nitrates. Of these, metal halides are preferred. Metal halides are easier to handle and can more easily form crosslinking with higher strength.

Additionally, examples of the metal halides mentioned above include metal fluorides, metal chlorides, metal bromides, and metal iodides. Of these, metal chlorides are preferred. Metal chlorides are easy to handle and can form crosslinking with high strength with greater ease.

It is also preferred that the metal salt is other than metal oxides, metal carbonates, and fatty acid metal salts. Metal salts other than metal oxides, metal carbonates, and fatty acid metal salts tend to form a coordinate bond more easily (further tend to complex) with the functional groups containing an oxygen atom. Therefore, the use of a metal salt other than those described above further promotes the formation of crosslinking through a coordination bond.

Specifically, examples of the metal salt include FeCl₂, FeCl₂·4H₂O, FeCl₃, FeCl₃·6H₂O, CuCl₂, CuCl₂·2H₂O, and ZnCl₂. One metal salt may be used alone or two or more of these may be used in combination.

### <Manufacturing Method of Complex Polymer>

A method of manufacturing a complex polymer of the present disclosure is a method of manufacturing the complex polymer described above.

The method of manufacturing a complex polymer of the present disclosure includes causing the polymer chain to which the functional groups are bonded to react with a metal salt containing an element of Groups 3 to 12 in the periodic table.

According to such a method of manufacturing a complex polymer of the present disclosure, the complex polymer can be obtained easily.

Here, the molar ratio of the functional groups bonded to the polymer chain to the metal salt (functional groups bonded to the polymer chain/metal salt) is preferably 2 or more. When the molar ratio of the functional groups bonded to the polymer chain to the metal salt is 2 or more, excess metal ions derived from the metal salt can be reduced, and degradation of the complex polymer due to the metal ions can be suppressed. The molar ratio of the functional groups bonded to the polymer chain to the metal salt (functional groups bonded to the polymer chain/metal salt) is preferably 4 or more from the viewpoint of inhibiting degradation of the complex polymer, and is preferably 8 or less from the viewpoint of increasing crosslinked structures by the metal ions.

The polymer chain or the polymer chain to which the functional groups are bonded has a weight average molecular weight (Mw) of preferably 300 to 1,000,000, and more preferably 1,000 to 1,000,000. When the weight average molecular weight (Mw) is 1,000 or more, the tensile strength at break (TB) and elongation at break (EB) are improved, and when the weight average molecular weight (Mw) is 1,000,000 or less, the processability is improved.

In this specification, the weight average molecular weight (Mw) is determined by gel permeation chromatography (GPC) using polystyrene as a standard substance.

In addition, in the complexation reaction between the polymer chain to which the functional groups are bonded and the metal salt (metal ion) containing an element of Groups 3 to 12 in the periodic table, reaction conditions such as temperature, pressure, and time are preferably selected according to the used polymer chain to which the functional groups are bonded, the type of metal ion, and reactivity.

The complex polymer of the present disclosure may be prepared in advance by synthesis, etc., as described above, or may be generated in the method of manufacturing a rubber composition (in situ), for example, as described in the section on the method of manufacturing a rubber composition below.

### --First Manufacturing Method of Polymer Chain to which Functional Groups are Bonded--

The polymer chain to which the functional groups are bonded may be formed, for example, by ring-opening metathesis polymerization of a cycloocta-1,5-diene compound represented by the general formula (1) described above and a 5-cyclooctene-1,2-diol compound represented by the general formula (2) described above. As an example, the reaction scheme of ring-opening metathesis polymerization when cycloocta-1,5-diene is used as a compound represented by the general formula (1) and 5-cyclooctene-1,2-diol is used as a compound represented by the general formula (2) is described below.

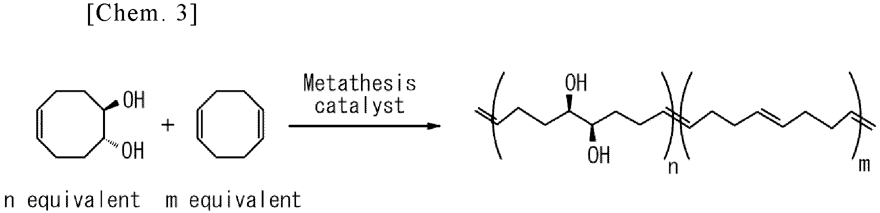

The molar ratio of the cycloocta-1,5-diene compound represented by the general formula (1) to the 5-cyclooctene-1,2-diol compound represented by the general formula (2) is preferably in the range of 1:9 to 9:1 and can be selected according to the purpose.

In the above-described ring-opening metathesis polymerization, known catalysts can be used, for example, transition metal complexes such as titanium complexes, zirconium complexes, molybdenum complexes, ruthenium complexes, tantalum complexes, tungsten complexes, and rhenium complexes can be used. Of these, transition metal-carbene complexes, such as Grubbs 1st generation catalyst, Grubbs 2nd generation catalyst , and Hoveyda-Grubbs catalyst are preferred. Grubbs 2nd generation catalyst is represented by the following structural formula: 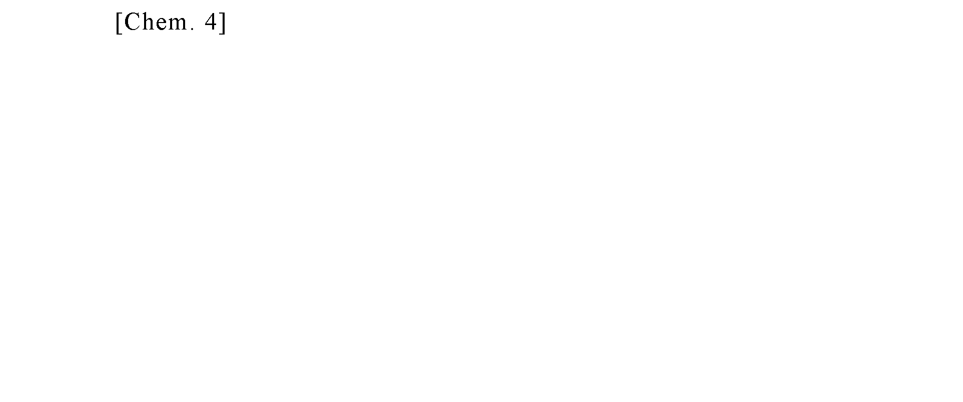 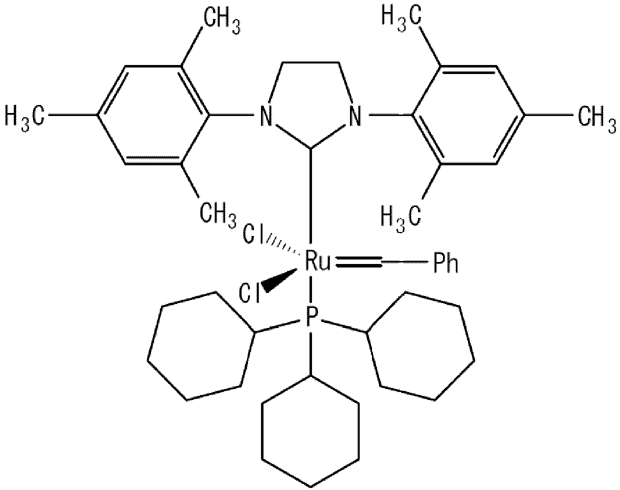 and a commercially available product can be used. The amount of the catalyst used is, for example, preferably 0.001 to 10 mol%, more preferably 0.01 to 1 mol%, and particularly preferably 0.01 to 0.1 mol% per 1 mol of monomers of the raw material.

**In** the above-mentioned ring-opening metathesis polymerization, a reaction temperature of -50°C to 180°C is preferred, -20°C to 100°C is more preferred, and -10°C to 80°C is even more preferred. The reaction time is preferably 1 to 24 hours, and the reaction pressure may be pressurized, depressurized, or atmospheric pressure, but atmospheric pressure is preferred. The reaction atmosphere is preferably an inert gas atmosphere such as nitrogen or argon.

The above-mentioned ring-opening metathesis polymerization may be carried out in a solvent. For example, inert solvents for the reaction are preferred as the solvent, such as aliphatic halogenated solvents, e.g., dichloromethane, chloroform, and 1,2-dichloroethane; ether-based solvents, e.g., diethyl ether, tetrahydrofuran, and dioxane; aromatic hydrocarbon solvents, e.g., benzene, toluene, xylene, and mesitylene, aromatic halogenated solvents, e.g., monochlorobenzene and dichlorobenzene, and aliphatic hydrocarbon solvents, e.g., hexane, heptane, octane, and cyclohexane.

### --Second Manufacturing Method of Polymer Chain to which Functional Groups are Bonded--

The polymer chain to which the functional groups are bonded may be formed by reacting the polymer chain with a compound having a functional group containing an oxygen atom. Here, the polymer chain can be synthesized by polymerization or copolymerization of a diene compound and/or an olefin compound.

Furthermore, the compound having a functional group containing an oxygen atom preferably has a functional group containing a sulfur atom. Compounds having a functional group containing an oxygen atom and a functional group containing a sulfur atom can be easily added to the polymer chain.

Examples of functional groups containing a sulfur atom include thiol groups (also referred to as "mercapto groups"), sulfide groups (also referred to as "thioether groups"), and thiol groups are preferred. When the compound having a functional group containing an oxygen atom has a thiol group as a functional group containing a sulfur atom, it is further easily be added to the polymer chain.

The compound having a functional group containing an oxygen atom preferably has two or more hydroxyl groups as functional groups containing an oxygen atom. In the compound having two or more hydroxyl groups, at least two hydroxyl groups in the compound are preferably bonded to adjacent carbon atoms. In other words, the compound having two or more hydroxyl groups is preferably a vicinal diol having a functional group containing a sulfur atom. By having at least two hydroxyl groups bonded to adjacent carbon atoms, the hydroxyl group of a compound added to one polymer chain and the hydroxyl group of the compound added to another polymer chain form multiple bonds with metal ions in close proximity, thereby further improving the strength of the crosslinked structure.

Examples of the compound having two or more hydroxyl groups include 1-mercapto-1,2-ethanediol, 3-mercapto-1,2-propanediol (also referred to as "thioglycerol" or "α-thioglycerol"), 2-mercapto-1,2-propanediol, 1-mercapto-1,2-propanediol, 3-mercapto-2-methyl-1,2-propanediol, 3-mercapto-2-ethyl-1,2-propanediol, 1-mercapto-2-methyl-1,2-propanediol, and 1-mercapto-2-ethyl-1,2-propanediol. Of these, thioglycerol is preferable.

### --Other Manufacturing Methods of Polymer Chain to which Functional Groups are Bonded--

The manufacturing method of the polymer chain to which the functional groups are bonded is not limited to the first or second manufacturing method described above and may be formed by other manufacturing methods. For example, a polymer chain in which two hydroxyl groups are bonded to adjacent carbon atoms can be manufactured by synthesizing a polymer chain having epoxy groups and ring-opening (hydrolyzing) the epoxy groups.

### <Rubber Composition>

A rubber composition of the present disclosure includes the above-described complex polymer of the present disclosure. Such a rubber composition of the present disclosure has improved tensile strength at break (TB) and elongation at break (EB).

The rubber composition of one embodiment of the present disclosure contains the above-mentioned complex polymer as the rubber component. The rubber composition may contain a rubber component other than the above-mentioned complex polymer, and examples of such a rubber component include natural rubber (NR), synthetic diene rubber, and non-diene rubber. Examples of the synthetic diene rubber include synthetic isoprene rubber (IR), styrene-butadiene rubber (SBR), butadiene rubber (BR), styrene-isoprene rubber (SIR), chloroprene rubber (CR), ethylene-butadiene copolymer, and ethylene-styrene-butadiene copolymer. Examples of the non-diene rubber include silicone rubber, fluoro rubber, and urethane rubber.

In the rubber components of the rubber composition, the ratio of the above-mentioned complex polymer is preferably 10 mass% or more, and the ratio of the above-mentioned complex polymer may be 100 mass%.

The complex polymer is a resin component if the polymer chain contains an olefin unit and does not contain a diene unit. In this case, any rubber can be used as the rubber component of the rubber composition, and natural rubber (NR), synthetic diene rubber, non-diene rubber, etc., described above may be used as the rubber component.

In addition to the complex polymer and rubber component described above, the rubber composition of the present disclosure may also include compounding agents commonly used in the rubber industry that may be appropriately selected and blended within a range that does not impair the object of the present disclosure. Examples of these compounding agents include, for example, fillers (such as carbon black and silica), softeners, waxes, stearic acid, antioxidants, silane coupling agents, zinc flower (zinc oxide), vulcanization accelerators, and the like. Commercial products are suitable for use as these compounding agents. Furthermore, it is preferred that the rubber composition of the present disclosure contains a small amount (e.g., 3 parts by mass or less) of sulfur or peroxides or does not contain sulfur or peroxides. Here, irrespective of whether the rubber composition contains a small amount (e.g., 3 parts by mass or less) of sulfur or peroxides or does not contain sulfur or peroxides, the rubber composition of the present disclosure may contain a vulcanization accelerator and preferably contains a vulcanization accelerator. As the vulcanization accelerator, a sulfenamide-based vulcanization accelerator is preferably contained.

In one embodiment of the rubber composition of the present disclosure, the amount of sulfur in the rubber composition is preferably 3 parts by mass or less, and more preferably 0.3 parts by mass or less per 100 parts by mass of the rubber component, and the amount of sulfur may be 0 parts by mass. Such a rubber composition is easy to recycle because the amount of sulfur is small and therefore the amount of sulfur-derived crosslinked structures (such as S-S bonds and C-S bonds), which are difficult to cleave once formed, is small.

In another embodiment of the rubber composition of the present disclosure, the content of peroxides in the rubber composition is preferably 3 parts by mass or less, and more preferably 0.3 parts by mass or less per 100 parts by mass of the rubber component, and the amount of peroxides may be 0 parts by mass. Such a rubber composition is easy to recycle because the content of peroxides is small and therefore the content of peroxide-derived crosslinked structures (such as C-C bonds), which are difficult to cleave once formed, is small.

Furthermore, in another embodiment of the rubber composition of the present disclosure, it is preferred that the amount of sulfur in the rubber composition is 3 parts by mass or less per 100 parts by mass of the rubber component and the amount of peroxides in the rubber composition is 3 parts by mass or less per 100 parts by mass of the rubber component. It is more preferred that the amount of sulfur in the rubber composition is 0.3 parts by mass or less and the amount of peroxides in the rubber composition is 0.3 parts by mass or less per 100 parts by mass of the rubber component. Such a rubber composition is easy to recycle because the content of sulfur is small, the content of peroxides is small, and therefore the amount of sulfur- and peroxide-derived crosslinked structures (such as S-S bonds, C-S bonds, and C-C bonds) is small.

Examples of the waxes include paraffin wax and microcrystalline wax. The content of the waxes is not particularly limited and is preferably in the range of 0.1 to 5 parts by mass, more preferably 1 to 4 parts by mass, per 100 parts by mass of the rubber component.

The amount of the stearic acid is not particularly limited and is preferably in the range of 0.1 to 5 parts by mass, more preferably 0.5 to 4 parts by mass, per 100 parts by mass of the rubber component.

Examples of the antioxidants include N-(1,3-dimethylbutyl)-N'-phenyl-p-phenylenediamine (6PPD), 2,2,4-trimethyl-1,2-dihydroquinoline polymer (TMDQ), 6-ethoxy-2,2,4-trimethyl-1,2-dihydroquinoline (AW), and N,N'-diphenyl-p-phenylenediamine (DPPD). The content of the antioxidants is not particularly limited and is preferably in the range of 0.1 to 5 parts by mass, more preferably 1 to 4 parts by mass, per 100 parts by mass of the rubber component.

The content of the zinc flower (zinc oxide) is not particularly limited and is preferably in the range of 0.1 to 10 parts by mass, more preferably 1 to 5 parts by mass, per 100 parts by mass of the rubber component.

Examples of the vulcanization accelerators include sulfenamide-based vulcanization accelerators, guanidine-based vulcanization accelerators, thiazole-based vulcanization accelerators, thiuram-based vulcanization accelerators, and dithiocarbamate-based vulcanization accelerators. The content of the vulcanization accelerators is not particularly limited and is preferably in the range of 0.1 to 5 parts by mass, more preferably in the range of 0.2 to 3 parts by mass, per 100 parts by mass of the rubber component.

The rubber composition of the present disclosure can be used in a wide variety of rubber products. For example, rubber products include tires, rubber crawlers, and seismic isolation rubber.

### <Method of Manufacturing Rubber Composition>

A method of manufacturing a rubber composition of the present disclosure is a method of manufacturing a rubber composition containing the complex polymer described above. The complex polymer may also be generated during a process of manufacturing the rubber composition.

In one method of manufacturing a rubber composition of one embodiment of the present disclosure, a complex polymer is formed by kneading a polymer chain to which the functional groups are bonded, and a metal salt containing an element of Groups 3 to 12 in the periodic table.

Such a method of manufacturing a rubber composition has excellent productivity because the complex polymer can be prepared during the manufacturing of the rubber composition (kneading of the rubber composition).

In kneading, any of the above-mentioned compounding agents may be blended at the same time.

Here, in the manufacturing of the rubber composition, the blending amount of the metal salt is preferably 0.1 to 10 parts by mass, and more preferably 0.1 to 5 parts by mass per 100 parts by mass of the polymer chain to which the functional groups are bonded. When the blending amount of the metal salt is 0.1 parts by mass or more per 100 parts by mass of the polymer chain to which the functional groups are bonded, the crosslinked structure by metal ions increases, and the tensile strength at break (TB) and elongation at break (EB) of the rubber composition are further improved. In addition, when the blending amount of the metal salt is 10 parts by mass or less per 100 parts by mass of the polymer chain to which the functional groups are bonded, excess metal ions derived from metal salt can be reduced, and degradation of the complex polymer due to metal ions can be suppressed.

The method of manufacturing a rubber composition of the present disclosure is not limited to the method described above. For example, a method of manufacturing a rubber composition of another embodiment of the present disclosure includes kneading a polymer chain and a compound having a functional group containing an oxygen atom in the first stage of kneading to form a polymer chain to which the functional groups are bonded. Furthermore, a method of manufacturing a rubber composition of another embodiment of the present disclosure includes adding a metal salt and kneading to complex the polymer chain to which the functional groups are bonded to thereby form the complex polymer in the second or subsequent stages of kneading. Such a method of manufacturing a rubber composition has excellent productivity because the complex polymer can be prepared during the manufacturing of the rubber composition (kneading of the rubber composition).

Furthermore, a method of manufacturing a rubber composition of another embodiment of the present disclosure includes forming the complex polymer in advance and blending the complex polymer that has been formed in advance during kneading. Such a method of manufacturing a rubber composition can also easily produce a rubber composition containing the above-mentioned complex polymer and has excellent productivity.

A method of manufacturing a rubber composition of another embodiment of the present disclosure includes preparing a polymer chain to which functional groups are bonded in advance, kneading the polymer chain to which the functional groups are bonded, and an optional compounding agent in the first stage of kneading, and adding a metal salt and kneading to complex the polymer chain to which the functional groups are bonded to thereby form the complex polymer in the second and subsequent stages of kneading. Such a method of manufacturing a rubber composition can also easily produce a rubber composition containing the above-mentioned complex polymer and has excellent productivity.

### EXAMPLES

The present disclosure will be described in more detail below with reference to examples, although the present disclosure is not limited to these examples.

### <Method of Synthesizing Polymer Chain to which Functional Groups are Bonded>

A polymer having hydroxyl groups was synthesized by carrying out ring-opening metathesis polymerization according to macromolecules 2020, 53, 4121 using cycloocta-1,5-diene and 5-cyclooctene-1,2-diol as monomers.

In the synthesized polymer having hydroxyl groups, the ratio of cycloocta-1,5-diene units is 80 mol% and the ratio of 5-cyclooctene-1,2-diol units is 20 mol%, per all constituting units of the polymer.

### <Production of Rubber Composition>

Rubber compositions were produced by carrying out kneading according to the formulations summarized in Tables 1, 2, and 3. In the kneading, first and second stages of kneading were performed in this order. In Examples, iron (II) chloride tetrahydrate was added in the second stage of kneading to form complex polymers. The first stage of kneading was performed at 110°C for 3 minutes, and the second stage was performed at 80°C for 1 minute and 30 seconds. The tensile strength at break (TB) and elongation at break (EB) of the resulting rubber compositions were measured with the following method.

The tensile strength at break (TB) and elongation at break (EB) could not be measured in Comparative Examples 2 and 3 because the rubber compositions did not hold together even when kneading was carried out.

In addition, no kneading was carried out in Comparative Example 4 because a functionalized polymer was used alone.

Furthermore, the bond dissociation energy between the iron ion and the oxygen-containing functional group (hydroxyl group) of the complex polymers in the rubber compositions produced in Examples 1 and 2 is about 218 kJ/mol.

### (1) Measurement Methods of TB and EB

JIS No. 7 dumbbell-shaped test pieces were prepared from the rubber compositions, and the tensile strength at break (TB) and elongation at break (EB) were measured by conducting tensile tests at room temperature (23°C) and high temperature (100°C) in accordance with JIS K6251. In Table 1, the tensile strength at break (TB) and elongation at break (EB) were expressed as index values by taking those of Comparative Example 1 at room temperature (23°C) as 100. In addition, in Table 2, the tensile strength at break (TB) was expressed as index values by taking those of Comparative Example 4 at room temperature (23°C) and high temperature (100°C) as 100. Furthermore, in Table 3, the tensile strength at break (TB) and elongation at break (EB) were expressed as index values by taking those of Comparative Example 1 at room temperature (23°C) as 100. Higher index values indicate greater tensile strength at break (TB) and elongation at break (EB).

**[Table 1]**

| | | | Example 1 | Comp. Ex. 1 |
|---|---|---|---|---|
| Formulation (first stage of kneading) | Polymer having hydroxyl groups *1 | parts by mass | 100 | - |
| | Butadiene rubber *2 | | - | 100 |
| | Stearic acid *3 | | - | 2 |
| | Wax *4 | | 2 | 2 |
| | Antioxidant 6PPD *5 | | 1 | 1 |
| Formulation (second stage of kneading) | FeCl₂·4H₂O *6 | parts by mass | 2.60 | - |
| | Zinc flower *7 | | - | 2.50 |
| | Vulcanization accelerator DPG *8 | | - | 1.73 |
| | Vulcanization accelerator CBS *9 | | - | 0.87 |
| | Vulcanization accelerator DM *10 | | - | 2.48 |
| | Sulfur *11 | | - | 1.95 |
| Physical properties | TB (room temperature) | Index | 176 | 100 |
| | EB (room temperature) | Index | 480 | 100 |

**[Table 2]**

| | | | Comp. Ex. 2 | Comp. Ex. 3 | Example 1 | Comp. Ex. 4 |
|---|---|---|---|---|---|---|
| Formulation (first stage of kneading) | Polymer having hydroxyl groups *1 | parts by mass | 100 | 100 | 100 | 100 |
| | Wax *4 | | 2 | 2 | 2 | - |
| | Antioxidant 6PPD *5 | | 1 | 1 | 1 | - |
| Formulation (second stage of kneading) | MgCl₂·6H₂O | parts by mass | - | 2.65 | - | - |
| | CaCl₂·2H₂O | | 1.95 | - | - | - |
| | FeCl₂·4H₂O *6 | | - | - | 2.60 | - |
| Physical properties | TB (room temperature) | Index | - | - | 178 | 100 |
| | TB (high temperature) | Index | - | - | 324 | 100 |

**[Table 3]**

| | | | Comp. Ex. 1 | Example 2 |
|---|---|---|---|---|
| Formulation (first stage of kneading) | Butadiene rubber *2 | parts by mass | 100 | 100 |
| | Stearic acid *3 | | 2 | 2 |
| | Wax *4 | | 2 | 2 |
| | Antioxidant 6PPD *5 | | 1 | 1 |
| | α-thioglycerol *12 | | - | 6 |
| Formulation (second stage of kneading) | FeCl₂·4H₂O *6 | parts by mass | - | 1.3 |
| | Zinc flower *7 | | 2.50 | 2.50 |
| | Vulcanization accelerator DPG *8 | | 1.73 | 0.87 |
| | Vulcanization accelerator CBS *9 | | 0.87 | 0.43 |
| | Vulcanization accelerator DM *10 | | 2.48 | 1.24 |
| | Sulfur *11 | | 1.95 | 0.98 |
| Physical properties | EB (room temperature) | Index | 100 | 706 |
| | TB (room temperature) | Index | 100 | 180 |

| | | | | |
|---|---|---|---|---|
| *1 Polymer having hydroxyl groups: the polymer having hydroxyl groups synthesized by the above method *2 Butadiene rubber: trade name "TUFDENE^{®} 2000R" (TUFDENE is a registered trademark in Japan, other countries, or both) manufactured by Asahi Kasei Corporation *3 Stearic acid: trade name "Lunak S-70V" manufactured by Kao Corporation *4 Wax: trade name "Suntight A" manufactured by Seiko Chemical Co., Ltd. *5 Antioxidant 6PPD: N-phenyl-N'-(1,3-dimethylbutyl)-p-phenylenediamine, trade name "NOCRAC 6C" manufactured by OUCHI SHINKO CHEMICAL INDUSTRIAL CO., LTD. *6 FeCl₂·4H₂O: manufactured by FUJIFILM Wako Pure Chemical Corporation *7 Zinc flower: manufactured by FUJIFILM Wako Pure Chemical Corporation *8 Vulcanization accelerator DPG: 1,3-diphenylguanidine, trade name "SOXINOL D" manufactured by Sumitomo Chemical Co., Ltd. *9 Vulcanization accelerator CBS: N-cyclohexyl-2-benzothiazolylsulfenamide, trade name "Sanceler CM-G" manufactured by Sanshin Chemical Industry Co. Ltd. *10 Vulcanization accelerator DM: di-2-benzothiazolyl disulfide, trade name "NOCCELER DM-P" manufactured by OUCHI SHINKO CHEMICAL INDUSTRIAL CO., LTD. *11 Sulfur: manufactured by FUJIFILM Wako Pure Chemical Corporation *12 α-thioglycerol: manufactured by Tokyo Chemical Industry Co., Ltd. | | | | |

It can be understood from Table 1 and Table 3 that the rubber compositions of the examples according to the present disclosure have improved tensile strength at break (TB) and elongation at break (EB) compared to a typical rubber composition with sulfur crosslinking (Comparative Example 1).

It can also be understood from Table 2 that the rubber compositions of the examples according to the present disclosure have improved tensile strength at break (TB) at room and elevated temperatures compared to an elastomer crosslinked by hydrogen bonding of diols (Comparative Example 4).

### INDUSTRIAL APPLICABILITY

The complex polymer and rubber composition of the present disclosure can be used in rubber products, such as tires, rubber crawlers, and seismic isolation rubber.

## Claims

1. A complex polymer comprising:
a polymer chain containing a diene unit and/or an olefin unit; and
two or more functional groups containing an oxygen atom bonded to a main chain and/or a side chain of the polymer chain,
wherein the oxygen atoms in at least two of the functional groups are bonded to adjacent carbon atoms in the main chain and/or the side chain of the polymer chain, and at least two of the functional groups are complexed with a metal ion of an element of Groups 3 to 12 in the periodic table.

2. The complex polymer according to claim 1, wherein a bond dissociation energy between the metal ion and the functional groups is 100 kJ/mol or more.

3. The complex polymer according to claim 1 or 2, wherein the metal ion and the functional groups are bonded by a coordination bond.

4. The complex polymer according to any one of claims 1 to 3, wherein the oxygen atoms in at least two of the functional groups are bonded to the metal ion.

5. The complex polymer according to any one of claims 1 to 4, wherein at least two of the functional groups containing an oxygen atom are derived from hydroxyl groups.

6. The complex polymer according to any one of claims 1 to 5, wherein the metal ion is selected from metal ions of elements of Groups 7 to 12 in the periodic table.

7. The complex polymer according to claim 6, wherein the metal ion is at least one selected from the group consisting of iron, copper, and zinc ions.

8. The complex polymer according to any one of claims 1 to 7, wherein the functional groups are bonded to the polymer chain in an amount of 0.1 to 40 mol% with respect to the monomer units.

9. The complex polymer according to any one of claims 1 to 8, wherein the metal ion is complexed by adding a metal salt to the polymer chain to which the functional groups are bonded, and the metal salt is a metal halide.

10. The complex polymer according to claim 9, wherein the metal salt is a metal chloride.

11. A rubber composition comprising the complex polymer as claimed in any one of claims 1 to 10.

12. A method of manufacturing the complex polymer as claimed in any one of claims 1 to 10, the method comprising:
causing the polymer chain to which the functional groups are bonded to react with a metal salt containing an element of Groups 3 to 12 in the periodic table.

13. The method of manufacturing the complex polymer according to claim 12, wherein a molar ratio of the functional groups bonded to the polymer chain to the metal salt (functional groups bonded to the polymer chain/metal salt) is 4 or more.

14. A method of manufacturing the rubber composition as claimed in claim 11, the method comprising:
generating the complex polymer by kneading the polymer chain to which the functional groups are bonded with a metal salt containing an element of Groups 3 to 12 in the periodic table.

15. The method of manufacturing the rubber composition according to claim 14, wherein the amount of the metal salt is 0.1 to 10 parts by mass per 100 parts by mass of the polymer chain to which the functional groups are bonded.

## Patentansprüche

1. Komplexes Polymer, umfassend:
eine Polymerkette, die eine Dieneinheit und/oder eine Olefineinheit enthält; und
zwei oder mehr funktionelle Gruppen, die ein an eine Hauptkette und/oder eine Seitenkette der Polymerkette gebundenes Sauerstoffatom enthalten,
wobei die Sauerstoffatome in mindestens zwei der funktionellen Gruppen an benachbarte Kohlenstoffatome in der Hauptkette und/oder der Seitenkette der Polymerkette gebunden sind, und mindestens zwei der funktionellen Gruppen mit einem Metallion eines Elements der Gruppen 3 bis 12 des Periodensystems komplexiert sind.

2. Komplexes Polymer nach Anspruch 1, wobei eine Bindungsdissoziationsenergie zwischen dem Metallion und den funktionellen Gruppen 100 kJ/mol oder mehr beträgt.

3. Komplexes Polymer nach Anspruch 1 oder 2, wobei das Metallion und die funktionellen Gruppen durch eine Koordinationsbindung gebunden sind.

4. Komplexes Polymer nach einem der Ansprüche 1 bis 3, wobei die Sauerstoffatome in mindestens zwei der funktionellen Gruppen an das Metallion gebunden sind.

5. Komplexes Polymer nach einem der Ansprüche 1 bis 4, wobei mindestens zwei der funktionellen Gruppen, die ein Sauerstoffatom enthalten, aus Hydroxylgruppen abgeleitet sind.

6. Komplexes Polymer nach einem der Ansprüche 1 bis 5, wobei das Metallion aus Metallionen von Elementen der Gruppen 7 bis 12 des Periodensystems ausgewählt ist.

7. Komplexes Polymer nach Anspruch 6, wobei das Metallion mindestens eines ausgewählt aus der Gruppe bestehend aus Eisen-, Kupfer- und Zinkionen ist.

8. Komplexes Polymer nach einem der Ansprüche 1 bis 7, wobei die funktionellen Gruppen in einer Menge von 0,1 bis 40 Mol-% bezogen auf die Monomereinheiten an die Polymerkette gebunden sind.

9. Komplexes Polymer nach einem der Ansprüche 1 bis 8, wobei das Metallion durch Zugabe eines Metallsalzes zur Polymerkette, an welche die funktionellen Gruppen gebunden sind, komplexiert wird und das Metallsalz ein Metallhalogenid ist.

10. Komplexes Polymer nach Anspruch 9, wobei das Metallsalz ein Metallchlorid ist.

11. Kautschukzusammensetzung, umfassend das komplexe Polymer nach einem der Ansprüche 1 bis 10.

12. Verfahren zur Herstellung des komplexen Polymers nach einem der Ansprüche 1 bis 10, wobei das Verfahren umfasst:
Veranlassen der Polymerkette, an die die funktionellen Gruppen gebunden sind, mit einem Metallsalz zu reagieren, das ein Element der Gruppen 3 bis 12 des Periodensystems enthält.

13. Verfahren zur Herstellung des komplexen Polymers nach Anspruch 12, wobei ein Molverhältnis der an die Polymerkette gebundenen funktionellen Gruppen zum Metallsalz (an die Polymerkette gebundene funktionelle Gruppen/Metallsalz) 4 oder mehr beträgt.

14. Verfahren zur Herstellung der Kautschukzusammensetzung nach Anspruch 11, wobei das Verfahren umfasst:
Erzeugen des komplexen Polymers durch Kneten der Polymerkette, an die die funktionellen Gruppen gebunden sind, mit einem Metallsalz, das ein Element der Gruppen 3 bis 12 des Periodensystems enthält.

15. Verfahren zur Herstellung der Kautschukzusammensetzung nach Anspruch 14, wobei die Menge des Metallsalzes 0,1 bis 10 Masseteile pro 100 Masseteile der Polymerkette beträgt, an die die funktionellen Gruppen gebunden sind.

## Revendications

1. Polymère complexé comprenant :
une chaîne polymère contenant un motif diène et/ou un motif oléfine ; et
deux ou plusieurs groupes fonctionnels contenant un atome d'oxygène lié à une chaîne principale et/ou à une chaîne latérale de la chaîne polymère,
dans lequel les atomes d'oxygène dans au moins deux des groupes fonctionnels sont liés à des atomes de carbone adjacents dans la chaîne principale et/ou la chaîne latérale de la chaîne polymère et au moins deux des groupes fonctionnels sont complexés avec un ion métallique d'un élément des groupes 3 à 12 du tableau périodique.

2. Polymère complexé selon la revendication 1, dans lequel une énergie de dissociation de la liaison entre l'ion métallique et les groupes fonctionnels est de 100 kJ/mol ou plus.

3. Polymère complexé selon la revendication 1 ou 2, dans lequel l'ion métallique et les groupes fonctionnels sont liés par une liaison de coordination.

4. Polymère complexé selon l'une quelconque des revendications 1 à 3, dans lequel les atomes d'oxygène dans au moins deux des groupes fonctionnels sont liés à l'ion métallique.

5. Polymère complexe selon l'une quelconque des revendications 1 à 4, dans lequel au moins deux des groupes fonctionnels contenant un atome d'oxygène sont dérivés de groupes hydroxyle.

6. Polymère complexé selon l'une quelconque des revendications 1 à 5, dans lequel l'ion métallique est choisi parmi les ions métalliques des éléments des groupes 7 à 12 du tableau périodique.

7. Polymère complexé selon la revendication 6, dans lequel l'ion métallique est au moins un ion choisi parmi les ions fer, cuivre et zinc.

8. Polymère complexé selon l'une quelconque des revendications 1 à 7, dans lequel les groupes fonctionnels sont liés à la chaîne polymère en une quantité comprise entre 0,1 à 40 % en moles par rapport aux unités monomères.

9. Polymère complexé selon l'une quelconque des revendications 1 à 8, dans lequel l'ion métallique est complexé par l'ajout d'un sel métallique à la chaîne polymère à laquelle les groupes fonctionnels sont liés, et le sel métallique est un halogénure métallique.

10. Polymère complexé selon la revendication 9, dans lequel le sel métallique est un chlorure métallique.

11. Composition de caoutchouc comprenant le polymère complexé tel que revendiqué dans l'une quelconque des revendications 1 à 10.

12. Procédé de fabrication du polymère complexé selon l'une quelconque des revendications 1 à 10, ledit procédé comprenant :
le fait de provoquer la réaction de la chaîne polymère à laquelle les groupes fonctionnels sont liés avec un sel métallique contenant un élément des groupes 3 à 12 du tableau périodique.

13. Procédé de fabrication du polymère complexé selon la revendication 12, dans lequel un rapport molaire entre les groupes fonctionnels liés à la chaîne polymère et le sel métallique (groupes fonctionnels liés à la chaîne polymère/ sel métallique) est supérieur ou égal à 4.

14. Procédé de fabrication de la composition de caoutchouc selon la revendication 11, le procédé comprenant :
la génération du polymère complexe en pétrissant la chaîne polymère à laquelle les groupes fonctionnels sont liés avec un sel métallique contenant un élément des groupes 3 à 12 du tableau périodique.

15. Procédé de fabrication de la composition de caoutchouc selon la revendication 14, dans lequel la quantité de sel métallique est de 0,1 à 10 parties en masse pour 100 parties en masse de la chaîne polymère à laquelle les groupes fonctionnels sont liés.
